**Europäisches Patentamt**

**European Patent Office**

**Office européen des brevets**

(19)

(11) Veröffentlichungsnummer: **0 051 104**
**A1**

(12)

# EUROPÄISCHE PATENTANMELDUNG

(21) Anmeldenummer: **81103910.6**

(22) Anmeldetag: **21.05.81**

(51) Int. Cl.³: **C 02 F 9/00**
**C 02 F 1/44, C 02 F 1/46**
**B 01 D 13/00, C 05 C 5/00**

(30) Priorität: **03.11.80 DE 3041209**

(43) Veröffentlichungstag der Anmeldung:
**12.05.82 Patentblatt 82/19**

(84) Benannte Vertragsstaaten:
**AT BE CH DE FR GB IT LI LU NL SE**

(71) Anmelder: **Josef van Opbergen GmbH & Co KG**
**Rampenstrasse 2**
**D-4040 Neuss(DE)**

(72) Erfinder: **Van Opbergen, Gert, Ing. grad.**
**Dürerstrasse 12**
**D-4040 Neuss(DE)**

(72) Erfinder: **Peters, Thomas, Dr.-Ing.**
**Jostenallee 50**
**D-4040 Neuss(DE)**

(74) Vertreter: **Paul, Dieter-Alfred, Dipl.-Ing.**
**Erftstrasse 82**
**D-4040 Neuss 1(DE)**

(54) **Verfahren zur Aufbereitung von insbesondere nitrathaltigem Wasser.**

(57) Bei einem Verfahren zur Aufbereitung von insbesondere nitrathaltigem Wasser, wie beispielsweise Grundwasser, Brackwasser oder dergleichen, wird das Wasser mittels Umkehrosmose in ein nitratarmes Permeat und ein nitratreiches Konzentrat aufgeteilt und letzteres bis zum Feststoffausfall eingedampft.

Um ein solches Verfahren kostengünstiger betreiben zu können, wird das Konzentrat von Härtebildnern befreit, mittels eines Membrantrennverfahrens zu einer Sole aufkonzentriert und diese dann eingedampft.

EP 0 051 104 A1

Croydon Printing Company Ltd

# Dipl.-Ing. Dieter-Alfred Paul
## Patentanwalt
Zugelassener Vertreter beim Europäischen Patentamt

Patentanwalt Dipl.-Ing. Paul, Erftstr. 82, D-4040 Neuss 1

Erftstr. 82
D-4040 Neuss 1
Tel.: (0 21 01) 27 32 32
Datum:

| Mein Zeichen: |
| --- |
| 5 ap 81 654 |
| Ihr Zeichen: |

Josef van Opbergen GmbH & Co KG, Rampenstr. 2
D-4o4o Neuss

**Verfahren zur Aufbereitung von insbesondere nitrathaltigem Wasser**

Die Erfindung betrifft ein Verfahren zur Aufbereitung von insbesondere nitrathaltigem Wasser wie beispielsweise Grundwasser, Brackwasser oder dergleichen, bei dem Wasser mittels Umkehrosmose in ein nitratarmes Permeat und ein nitratreiches Konzentrat aufgeteilt und letzteres bis zum Feststoffausfall eingedampft wird.

Die Aufbereitung von Grund- oder Brackwasser bereitet Probleme, weil aufgrund steigenden Wasserbedarfs die Grundwasservorräte immer stärker genutzt werden müssen. Dabei muß dann auch auf problematisches Grundwasser zurückgegriffen werden, wobei hier insbesondere die teilweise hohen Nitratgehalte, bedingt durch Auswaschungen von im Boden enthaltenen Nitraten oder durch übermäßige Düngung eine gesundheitliche Gefährdung darstellen, weil durch Reduktion der Nitrate Nitrosamine entstehen, die bekanntlich krebserzeugend wirken.

Damit auch nitrathaltiges Grundwasser als Trinkwasser verwendet werden kann, werden zur Zeit verschiedene Ausbereitungsverfahren entwickelt, mit denen die Nitrate weitgehend entfernt werden sollen. Ein weiterer Grund für derartige Entwicklungen besteht darin, daß der derzeitig geltende, zulässige Grenzwert für den Nitratgehalt wegen der Erkenntnis über dessen Gesundheitsschädlichkeit drastisch gesenkt werden soll, so daß sich auch schon im Betrieb befindliche Wasserwerke mit der Nitratentfernung befassen müssen.

In der Diskussion ist derzeit ein Aufbereitungsverfahren, bei dem die Nitrate mittels Umkehrosmose entfernt werden sollen. Dieses Membrantrennverfahren wird bereits erfolgreich in kommerziellen Großanlagen zur Brack- und Meerwasserentsalzung eingesetzt. Probleme ergeben sich jedoch dadurch, daß bei der Umkehrosmose ein nitratreiches Konzentrat anfällt. Zur Beseitigung dieses Konzentrates wird die Eindampfung bis zum Ausfall der Feststoffe vorgeschlagen, wobei die Feststoffe dann deponiert werden können, während das ebenfalls anfallende Kondensat dem bei der Umkehrosmose entstehenden Permeat zugemischt werden kann.

Diese zweistufige Verfahren ist jedoch außerordentlich kostenaufwendig, weshalb es auch bisher industriell noch nicht angewendet worden ist.

Der Erfindung liegt die Aufgabe zugrunde, das vorgenannte Verfahren derart weiterzuentwickeln, daß es wesentliche konstengünstiger betrieben werden kann.

Diese Aufgabe wird erfindungsgemäß dadurch gelöst, daß das Konzentrat von Härtebildner befreit, mittels eines Membrantrennverfahrens zu einer Sole aufkonzentriert und diese dann eingedampft wird. Durch diese zusätzlichen Maßnahmen kann die einzudampfende Solemenge stark reduziert werden bis zu Bereichen von 85 % und mehr. Entsprechend gering können Anlage- und Betriebskosten des Verdampfers gehalten werden. Berechnungen haben gezeigt, daß die Gesamtwirtschaftlichkeit einer nach diesem Verfahren arbeitenden Anlage wesentlich verbessert wird.

In Ausbildung der Erfindung ist vorgesehen, daß das beim Membrantrennverfahren anfallende, nitratarme Wasser dem Permat zugemischt wird.

Desweiteren sieht die Erfindung vor, daß die Sole im Kreislauf wieder teilweise oder ganz dem schon enthärteten Konzentrat zugeführt wird. Durch diese Kreis- laufführung kann der Aufkonzentrierungsgrad entspre- chend den Anforderungen erhöht werden.

Als Membrantrennverfahren kann eine weitere Umkehrosmosestufe zur Anwendung kommen. Wegen des dabei zu überwindenden, sehr hohen osmotischen Druckes bietet es sich jedoch eher an, für das Membrantrennverfahren auf die Elektrodialyse zurückzugreifen.

Die Härtebildnerentfernung kann zweckmäßigerweise in einem Ionenaustauscher geschehen. Bei Erschöpfung dieses Ionenaustauschers kann er dann mit der Sole unter Zugabe von Kochsalz regeneriert werden. Das Regenerat kann dann mit eingedampft werden.

Die Erfindung sieht desweiteren vor, daß das nitrathaltige Wasser vor der Aufteilung durch Umkehrosmose vorgewärmt wird, und zwar zumindest auf 2o$^{o}$C. Durch diese Vorwärmung kann die Ausbeute bei der Umkehrosmose wesentlich gesteigert werden.

Für die Vorwärmung bietet es sich an, die bei der Eindampfung der Sole anfallende Abwärme, wie Kondensat oder Brüden, zu nutzen. Auch das Permeat ist wegen seiner erhöhten Temperatur für die Vorwärmung geeignet.

Das Eindampfen kann wegen der nur noch geringen anfallenden Menge in einem Dünnschichtverdampfer geschehen. Die bei der Eindampfung anfallende Abwärme, wie beispielsweise Brüden oder Kondensat, kann zur Beheizung bei der Verdampfung genützt werden, wodurch der Energieverbrauch gering gehalten wird.

Unter bestimmten Umständen kann der Energieverbrauch der Gesamtanlage noch dadurch verringert werden, daß die im Konzentrat enthaltene Druckenergie zurückgewonnen wird, beispielsweise durch Entspannung in einer Strömungsmaschine.

Schließlich besteht die Möglichkeit, die beim Eindampfen anfallenden Feststoffe als Grundstoffe für die Herstellung von Dünger zu verwenden, so daß eine Deponierung entfallen kann.

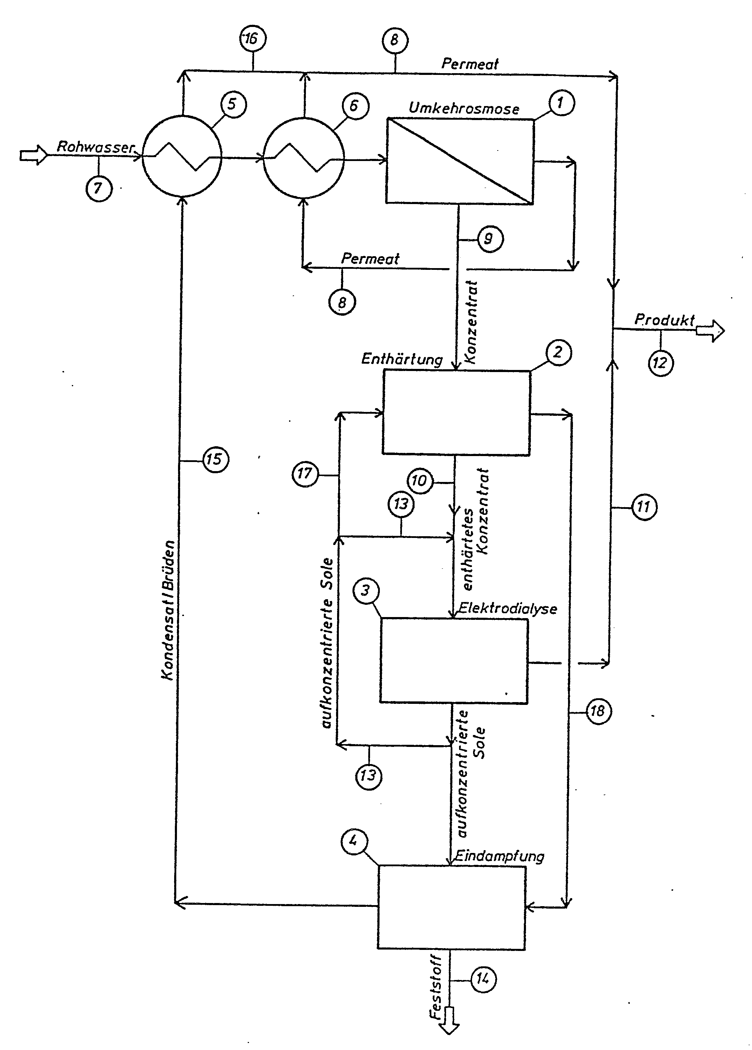

In der Zeichnung ist die Erfindung an Hand eines den Verfahrensablauf durch ein Blockbild darstellenden Ausführungsbeispiels näher veranschaulicht. Dabei sind die weiteren Einrichtungen eines Wasserwerkes, die jedoch zur Erläuterung des erfindungsgemäßen Verfahrens nicht notwendig sind, der Übersichtlichkeit halber weggelassen.

Die Anlage besteht im wesentlichen aus einer Umkehrosmoseeinheit 1, einem Ionenaustauscher 2, einer Elektrodialyseeinheit 3, einer Dünnschichtverdampfungsanlage 4 sowie zwei Wärmetauschern 5, 6.

Das über die Leitung 7 ankommende und gegebenenfalls vorbehandelte Rohwasser durchläuft zunächst die beiden Wärmetauscher 5, 6, in denen es auf Temperaturen über 20°C, vorzugsweise 25°C vorgewärmt wird. In der Umkehrosmoseeinheit 1 wird das Rohwasser dann in ein nitratarmes Permeat (Leitung 8) und ein nitratreiches Konzentrat (Leitung 9) aufgeteilt, wobei dieses Konzentrat unter hohem Druck steht. Es kann deshalb - was hier nicht gezeigt ist - zunächst zur Energierückgewinnung beispielsweise einer Peltonturbine zugeleitet werden.

Nach der Druckentspannung gelangt das Konzentrat über die Leitung 9 in den Ionenaustauscher 2, in dem die Härtebildner aus dem Konzentrat entfernt werden. Diese würden nämlich ansonsten zu einer Verkrustung in der nachfolgenden Verfahrensstufe führen.

Das enthärtete Konzentrat wird dann über die Leitung 1o der Elektrolyseeinheit 3 zugeführt. Hier wird das Konzentrat zu einer Sole aufkonzentriert, wobei ein nitratarmes Diluat anfällt, das über die Leitung 11 dem Permeat in Leitung 8 zugemischt wird und so das Endprodukt (Leitung 12) ergibt. Statt der Elektrolyseeinheit 3 kann auch eine weitere Umkehrosmoseeinheit vorgesehen sein.

Durch Kreislaufführung über die Leitung 13 kann eine mehrfache Aufkonzentrierung der Sole erzielt werden, wodurch die dann einzudampfende Solemenge um etwa 85 % verringert wird. Die auf diese Weise verminderte Solemenge wird dem Dünnschichtverdampfer 4 zugeführt, in dem der Feststoff 14 mit nur noch geringer Restfeuchte auskristallisiert. Die dabei anfallenden Brüden bzw. Kondensate werden über die Leitung 15 in den Wärmetauscher 5 geführt und sorgen dort für die Vorwärmung des Rohwassers in Leitung 7. Über die Leitung 16 kann das verbleibende Kondensat dem Permeat in Leitung 8 zugemischt werden.

Letzteres wird ebenfalls zur Vorwärmung des Rohwassers in Leitung 7 genutzt, indem es von der Umkehrosmoseeinheit 1 über die Leitung 8 dem Wärmetauscher 6 zugeleitet wird.

Der Ionenaustauscher 2 kann bei Erschöpfung durch die in der Elektrolyseeinheit 3 aufkonzentrierte Sole regeneriert werden. Dies geschieht über die Leitung 17, wobei - was hier nicht gezeigt wird - der Sole noch Kochsalz hinzugegeben wird. Das Regenerat wird dann direkt über die Leitung 18 dem Dünnschichtverdampfer 4 zugeleitet. Wenn die Regenerierung abgeschlossen ist, kann wieder das Konzentrat über die Leitung 8 durch den Ionenaustauscher 2 geleitet werden.

# Dipl.-Ing. Dieter-Alfred Paul
## Patentanwalt
Zugelassener Vertreter beim Europäischen Patentamt

Patentanwalt Dipl.-Ing. Paul, Erftstr. 82, D-4040 Neuss 1

Erftstr. 82
D-4040 Neuss 1
Tel.: (0 21 01) 27 32 32
Datum:

| Mein Zeichen: |
|---|
| 5 ap P1 654 |
| Ihr Zeichen: |

Josef van Opbergen GmbH & Co KG, Rampenstr. 2
D-4o4o Neuss

Verfahren zur Aufbereitung von insbesondere nitrathaltigem Wasser

Ansprüche:

1. Verfahren zur Aufbereitung von insbesondere nitrathaltigem Wasser wie beispielsweise Grundwasser,
Brackwasser oder dergleichen, bei dem das Wasser
mittels Umkehrosmose in ein nitratarmes Permeat
und ein nitratreiches Konzentrat aufgeteilt und
letzteres bis zum Feststoffausfall eingedampft wird,
dadurch gekennzeichnet, daß das Konzentrat von Härtebildnern befreit und mittels eines Membrantrennverfahrens zu einer Sole aufkonzentriert und diese
dann eingedampft wird.

2. Verfahren nach Anspruch 1, dadurch gekennzeichnet,
daß das beim Membrantrennverfahren anfallende nitratarme Wasser dem Permat zugemischt wird.

3. Verfahren nach Anspruch 1 oder 2, dadurch gekennzeichnet, daß die Sole im Kreislauf wieder teilweise oder ganz dem enthärteten Konzentrat zugeführt wird.

4. Verfahren nach einem der Ansprüche 1 bis 3, dadurch gekennzeichnet, daß als Membrantrennverfahren - gegebenenfalls zusätzlich - die Umkehrosmose und/oder die Elektrodialyse angewendet wird.

5. Verfahren nach einem der Ansprüche 1 bis 4, dadurch gekennzeichnet, daß die Härtebildnerentfernung durch Ionenaustausch geschieht.

6. Verfahren nach Anspruch 5, dadurch gekennzeichnet, daß der Ionenaustauscher (2) bei Erschöpfung mit der Sole unter Zugabe von Kochsalz regeneriert wird.

7. Verfahren nach einem der Ansprüche 1 bis 6, dadurch gekennzeichnet, daß das nitrathaltige Wasser vor der Aufteilung durch Umkehrosmose auf mindestens 20 °C aufgewärmt wird.

8. Verfahren nach Anspruch 7, dadurch gekennzeichnet, daß das Permeat und/oder die bei der Eindampfung der Sole anfallende Abwärme, wie Kondensat oder Brüden - gegebenenfalls zusätzlich - für die Vorwärmung benutzt wird.

9. Verfahren nach einem der Ansprüche 1 bis 8, dadurch gekennzeichnet, daß die bei der Eindampfung anfallende Abwärme, wie beispielsweise Brüden oder Kondensat - gegebenenfalls zusätzlich - zur Beheizung bei der Eindampfung genutzt wird.

10. Verfahren nach einem der Ansprüche 1 bis 9, dadurch

- 3 -

gekennzeichnet, daß die im Konzentrat enthaltene Druckenergie beispielsweise durch Entspannung in Strömungsmaschinen zurückgewonnen wird.

11. Verwendung der bei dem Verfahren nach einem der Ansprüche 1 bis lo anfallenden Feststoffe als Grundstoff für die Herstellung von Dünger.

### EUROPÄISCHER RECHERCHENBERICHT

Nummer der Anmeldung

EP 81 10 3910

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| Y | PATENTS ABSTRACTS OF JAPAN, Band 1, Nr. 140, 16. November 1977, Seite 3135C77<br><br>& JP - A - 52 89575 (HITACHI) 27-07-1977<br><br>  * Zusammenfassung *<br><br>-- | 1,3,4 | C 02 F  9/00<br>          1/44<br>          1/46<br>B 01 D 13/00<br>C 05 C  5/00 |
| Y | US - A - 3 639 231 (S.A. BRESLER)<br><br>  * Ansprüche 1,3; Figur 1; Spalte 1, Zeilen 31-66; Spalte 2, Zeile 40 - Spalte 3, Zeile 54; Beispiel 1 *<br><br>-- | 1,5,6 | |
| | | | RECHERCHIERTE SACHGEBIETE (Int. Cl.³) |
| A | DESALINATION, Band 19, 1976, Seiten 153-160<br>Amsterdam, NL.<br>J.W. McCUTCHAN et al.: "Reclamation of irrigation field drainage water"<br><br>  * Seite 153: "Zusammenfassung"; Seite 155, Tabelle 1; Seite 156, Zeilen 36-42; Seite 157, Zeilen 1-8 *<br><br>-- | 1,5,6 | B 01 D<br>C 02 F<br>C 01 B<br>C 01 G |
| A | US - A - 4 083 781 (F.E. CONGER)<br><br>  * Figuren 1A+B; Anspruch 1; Spalte 3, Zeile 29 - Spalte 4, Zeile 64; Spalte 5, Zeile 27 - Spalte 6, Zeile 68 *<br><br>-- | 1,4,7-10 | |
| A | US - A - 4 141 825 (F.E. CONGER)<br><br>  * Figuren 1A+B; Anspruch 1 *<br><br>--     ./. | 1,4,7,10 | |

Der vorliegende Recherchenbericht wurde für alle Patentansprüche erstellt.

| Recherchenort | Abschlußdatum der Recherche | Prüfer |
|---|---|---|
| Den Haag | 17-02-1982 | HOORNAERT |

EPA form 1503.1  06.78

| | EINSCHLÄGIGE DOKUMENTE | | | KLASSIFIKATION DER ANMELDUNG (Int. Cl.3) |
|---|---|---|---|---|
| Kategorie | Kennzeichnung des Dokuments mit Angabe, soweit erforderlich, der Maßgeblichen Teile | | betrifft Anspruch | |
| A | US - A - 4 105 556 (E.R. D'AMADDIO)<br><br>* Insgesamt *.<br><br>-- | | 1 | |
| A | DE - A - 2 553 416 (HAGER & ELSÄSSER GmbH)<br><br>* Ansprüche 1,3; Seite 7, Zeilen 16-18; Figuren 2,3; Seite 10, Zeile 25 - Seite 11, Zeile 7 *<br><br>-- | | 1,7 | |
| A | CHEMICAL ABSTRACTS, Band 84, 1976, Seite 320, Nr. 169498p Columbus, Ohio, U.S.A. E.E. FINDER: "Nitrate removal from water supplies"<br><br>& PROC. - PROF. CONF. NITROGEN EN-VIRON, 1973, 44-56<br><br>* Zusammenfassung *<br><br>-- | | 1 | RECHERCHIERTE SACHGEBIETE (Int. Cl.3) |
| T | CHEMICAL ABSTRACTS, Band 95, Nr. 8, 24. August 1981, Seite 366, Nr. 67738b Columbus, Ohio, U.S.A. R. RAUTENBACH et al.: "Nitrate re-moval from ground waters by reverse osmosis"<br><br>& WISS. UMWELT 1981, (1), 19-23<br><br>* Zusammenfassung *<br><br>----- | | 1-11 | |